# EUROPEAN PATENT APPLICATION

(11) **EP 4 826 585 A1**
(43) Date of publication of application: **21.10.2026**
(21) Application number: 25170950.7
(22) Date of filing: 16.04.2025
(51) Int. Cl.: G06F 21/75, H04L 9/40

(54) **METHOD AND SYSTEM FOR DETECTING UNAUTHORIZED ACCESS TO A PROCESSOR**

(71) Applicant: NXP B.V., 5656 AG Eindhoven (NL)
(72) Inventor: VESHCHIKOV, Nikita, 5656AG Eindhoven (NL)
(74) Representative: Colaiuda, Antonella

(57) **Abstract**

The present disclosure describes a method and a system for detecting unauthorized access to a processor, wherein the processor comprises a plurality of layers. The method comprises the steps of providing a decoy digital entity for embedding in a layer of the plurality of layers of the processor, associating, with the decoy digital entity, information associated with the processor and the layer of the plurality of layers of the processor in which the decoy digital entity is embedded, monitoring a computer network, wherein the computer network is configured to receive from a requesting computing device a request using the decoy digital entity, in response to receiving the request from the requesting computing device: reporting the unauthorized access.

## Description

### TECHNICAL FIELD

The present disclosure related to a method for detecting unauthorized access to a processor. The present disclosure further relates to a system for performing such a method.

### BACKGROUND

Embedded devices are becoming more or more important in various fields like automotive, medical care, and smart technologies. The security of those devices may be compromised by reverse engineering.

Reverse engineering is a process of understanding the internal working of a system. Reverse engineering is often used by hackers or attackers to try to find a vulnerability in the system. Once that the vulnerability is found, the hackers or attackers may gain unauthorized access to the system, and they may eventually compromise it.

### SUMMARY

In a first aspect of the present disclosure, it is disclosed a method for detecting unauthorized access to a processor, wherein the processor comprising a plurality of layers. The method comprises the steps of providing a decoy digital entity for embedding in a layer of the plurality of layers of the processor, associating with the decoy digital entity information associated with the processor and the layer of the plurality of layers of the processor in which the decoy digital entity is embedded, monitoring a computer network, wherein the computer network is configured to receive a request using the decoy digital entity from a requesting computing device, in response to receiving the request from the requesting computing device: reporting the unauthorized access.

In one or more embodiment, the step of associating with the decoy digital entity information associated with the processor and the layer of the plurality of layers of the processor in which the decoy digital entity is embedded comprises the step of embedding the information in the decoy digital entity.

In one or more embodiment, the method further comprising the step of storing the information associated with the decoy digital entity in a database.

In one or more embodiment, in response to receiving the request from the requesting computing device the method further comprises the step of searching the database for the information associated with the decoy digital entity; and retrieving from the database the information associated with the decoy digital entity.

In one or more embodiments of the first aspect of the present disclosure, the decoy digital entity is a decoy IP address or a decoy password or a decoy name of a library or a decoy file or a decoy cryptographic key or a decoy authentication token.

In one or more embodiments of the first aspect of the present disclosure, the method further comprises the step of sending the retrieved information associated with the decoy digital entity, the processor and the layer in which the decoy digital entity is embedded to a user interface.

In one or more embodiments of the first aspect of the present disclosure, the decoy digital entity is associated with a decoy webserver.

In one or more embodiments of the first aspect of the present disclosure, the method further comprises the step of configuring the decoy webserver to enter a conversation mode with the requesting computing device and to gather information associated with the requesting computing device.

In one or more embodiments of the first aspect of the present disclosure, the information associated with the requesting computing device comprises a physical address and/or a logical address and/or an attack strategy of the requesting computing device.

In a second aspect of the present disclosure, a system is disclosed. The system comprises a device configured to generate for embedding a decoy digital entity, DDE, in a layer of a plurality of layers of a processor, wherein the decoy digital entity is associated with information associated with the processor and the layer of the plurality of layers of the processor in which the decoy digital entity is embedded; a computer network; a monitoring unit configured to detect that a request from a requesting computing device using the decoy digital entity has been received by the computer network; wherein in response to receiving the request the monitoring unit is further configured to report the unauthorized access to a decoy digital entities handler.

In one or more embodiments of the second aspect of the present disclosure, the system further comprises a database configured to store information associated with the decoy digital entity.

In one or more embodiments of the second aspect of the present disclosure, the decoy digital entities handler is configured to search the database for information.

In one or more embodiments of the second aspect of the present disclosure, the system further comprises a decoy webserver configured to enter a conversation mode with the requesting computing device and to gather information associated with the requesting computing device.

In one or more embodiments of the second aspect of the present disclosure, the system further comprises a user interface.

In one or more embodiments of the second aspect of the present disclosure, the user interface is further configured to output the information associated with the decoy digital entity and/or to output the information associated with the requesting computing device.

### DESCRIPTION OF DRAWINGS

Embodiments of the present disclosure will be described in more detail with reference to the appended drawings, in which:
Figure 1 show a system according to an aspect of the present disclosure.
Figure 2 shows a processor according to a first embodiment of the present disclosure.
Figure 3 shows a processor according to a second embodiment of the present disclosure.
Figure 4 shows a processor according to a third embodiment of the present disclosure.
Figure 5 shows a system according to a second aspect of the present disclosure.
Figure 6 shows a system according to a third aspect of the present disclosure.
Figure 7 shows a flow chart of a method according to a fourth aspect of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DESCRIPTION OF EMBODIMENTS

Modern embedded devices or processors may have multiple security layers that may use encryption as well as multiple security zones such as secure subsystems and secure memory. Those processors are not permanently connected to an internet network and therefore cannot continuously report their state to the manufacturer. Moreover, an attacker would often disassemble and analyze a processor without needing to connect it to the internet network or even to a power supply. In such case, even if the processor has sensors and detection mechanisms for various hacking techniques it would still be unable to send an alert to a central server of the processor manufacturer.

In general terms, a processor may include a plurality of layers or zones. Such layers may be referred to as security or protection layers. A layer may include one or more encrypted units and/or central processing units and/or storage units and/or secure subsystems. A manufacturer of the processor may embed in one or more layers of the processor one or more decoy digital entities. The decoy digital entities may be defined as digital entities that are designed to be attractive for an attacker but have no purpose for the processor itself, i.e. they are not used by the processor itself. The decoy digital entities may be designed as strings. Examples of decoy digital entities may include: a decoy name of a library or a decoy name of a subsystem, a decoy password, a decoy file, a decoy IP address or a decoy web address, a decoy authentication token or a decoy encryption key. The decoy digital entities may further be designed to include information about a customer of the manufacturer. This information may include the name of the customer or a short form for it and/or the device of the customer which includes the processor. For example, the decoy digital entity may be a string with the name "securitylibrary_devicel_OEM1". A first part of the string's name (securitylibrary) may be designed to attract an attacker: in this case the attacker may think that the decoy digital entity is a library containing information about the security of the processor in which the decoy digital entity is embedded. A further or second part of the string's name (device1) may be the real name of the device that includes the processor. The device may be a device of a real customer of the manufacturer. The name of the customer may be included in a yet further or third part of the string (OEM1). In another embodiment, the decoy digital entity may contain information about the layer of the processor in which the decoy digital entity is embedded. Referring to the previous example the decoy digital entity may then contain an additional number like for example "securitylibrary3_device1_OEM1". This may be interpreted or read by a manufacturer as an indication that the digital decoy entity is embedded in the third layer of the processor. In another embodiment the name of the device and/or the name of the customer may be substituted by a string of numbers and/or letters, which may appear to the attacker as a version number of the processor. Including the name of the customer's device and the name of the customer may have either or both of two effects: the first one is that the decoy security entity may be seen as legitimate by an attacker and may be considered more attractive as it appears to contain valuable information about a real device and a real customer, and the second one is that it gives the manufacturer information about which device and which customer are been attacked by the attacker.

A list including the name and type of the decoy digital entities and their location in the processor (i.e. in which layer of the processor are they embedded) may be stored in a database owned and updated by, or otherwise under the control of, the manufacturer. If an attacker gets access to the processor, he may try to perform reverse engineering on it. As he analyses and dissembles the processor, going through its multiple layers, he may find the decoy digital entities embedded in it. He may then try to retrieve and request information about the digital entities by searching for them on a computer network, for example on a website of the manufacturer of the processor. Then, a monitoring unit may be configured to monitor the request using a decoy digital entity in such server and may then alert a decoy digital entities handler. The decoy digital entities handler intercepts the request and is configured to report the attack to the manufacturer. For example, it may search the manufacturer's database in order to retrieve information about the decoy digital entity and its location inside the processor. The decoy digital entities handler may then send this information to a user interface of the manufacturer. In this way the manufacturer may know on which processor reverse engineering was performed and which layer of the processor was attacked.

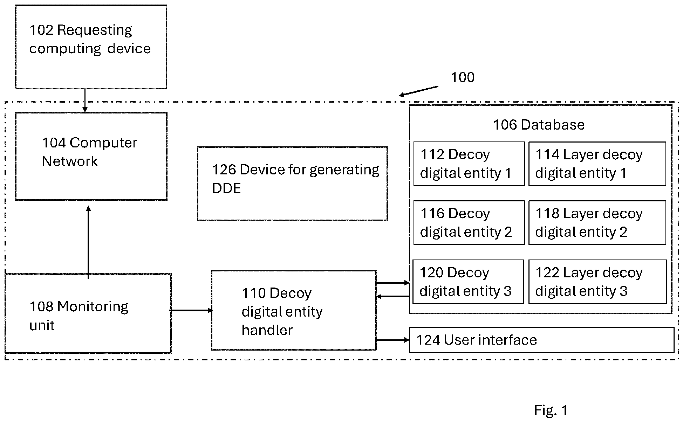

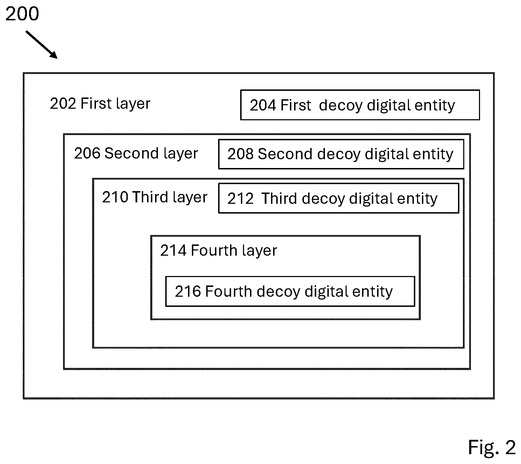

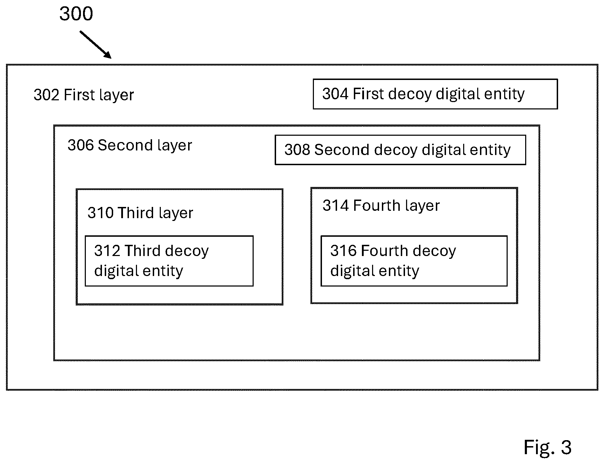

Figure 1 shows a system according to a first aspect of the present disclosure. The system 100 may include a device 126 configured to generate a decoy digital entity for embedding in a processor. The device can be any type of central processor unit (CPU) on which a program capable of creating a decoy digital entity may run. An example of program for creating a decoy digital entity may be a software for large language model, a machine learning program or a program for manually generating the decoy digital entities. The system 100 may be coupled to a requesting computing device 102, which sends a request for getting information about a decoy digital entity to a computer network 104. The requesting computing device 102 may be any type of system capable to be connected to a computer network and to communicate with it, like for example laptops, computer systems, smartphones, tablets and so on. The computer network 104 may include a webserver providing a search engine. In another embodiment the computer network 104 may include a website like for example an internet forum, where an attacker may ask for information regarding the decoy digital entity. In another embodiment the computer network may include a website of a manufacturer. The website of the manufacturer may provide a search option for retrieving information associated with libraries or other subsystems embedded in the products of the manufacturer. The request sent by the requesting computing device may be done by entering the decoy digital entity in a search bar and actively search for it or by posting the decoy digital entity in a website. A monitoring unit 108 is designed to look for specific topics or key words associated with and/or included in the decoy digital entity which are input in the computer network 104. In one embodiment, the monitoring unit 108 may be designed as a search alert. Upon detecting a request associated with the decoy digital entity, the monitoring unit 108 alerts a decoy digital entities handler 110 about the unauthorized access. The decoy digital entities handler may be a microprocessor, an integrated logic circuit or any other types of suitable processor. In one embodiment, the decoy digital entities may comprise the name of the layer of the processor and the processor in which the decoy digital entity is embedded. The decoy digital entities handler may read the decoy digital entity, and it may derive information associated with such decoy digital entity like for example the layer of the processor and the processor in which the decoy digital entity. In another embodiment the decoy digital entities handler may be coupled with a database 106. The decoy digital entities handler may be configured to search the information regarding the decoy digital entity in the database 106. The database 106 may be provided and updated by the manufacturer and is configured to store information associated with the decoy digital entities which have been embedded in one or more processors of the manufacturer by a device provided by the manufacturer. The device may be any type of device capable of installing digital decoy entities in a processor, like for example a computer system. The information may be stored as one or more lists or tables and include information about the name of the decoy digital entity, the processor in which the digital entities are embedded (like for example processor type, processor generation, processor identification number and so on) and the location of the decoy digital entities inside the processor (i.e. in which layer of the processor are they embedded as it will be explained in more details in Fig. 2 and Fig. 3). As an example, in Fig. 1 the database 106 may include information about three decoy digital entities (represented by 112 "decoy digital entity 1", 116 "decoy digital entity 2" and 120 "decoy digital entity 3") and their related location in one or more processors of the manufacturer. This information is represented in Fig. 1 by the boxes 114, 118 and 122. The decoy digital entities handler retrieves form the database 106 the relevant information associated with the required decoy digital entity that the attacker is searching and may send them to a user interface 124. It should be noted that, if the name of the processor and the name of the layer, in which the decoy digital entity is embedded, are embedded in the name of the decoy digital entity, the step of storing such information in the database may be skipped, because the decoy digital entities handler may be configured to read or interpret or infer such information from the name of the decoy digital entity. In this case the decoy digital entities handler may then directly send the information to the user interface 124. The user interface 124 allows a user to communicate with the decoy digital entities handler 110. The user interface may be connected to one or more devices for enabling communication with a user such as an administrator or a member of a security team of the manufacturer. For example, the user interface 124 may be enabled for coupling to a display, a mouse, a keyboard, or other input/output device. User interface 124 may also include a network interface having one or more devices for enabling communication with other hardware devices external to the system 100. The user interface allows a user to getting notified about the use of the decoy digital entity by the attacker and the possible breach in the security of one or more products. The user interface may for example be configured to output the information about the search of the decoy digital entity on a display. The user interface may be further used by a user for asking the decoy digital entities handler 110 to retrieve more information about the decoy digital entity from the database 106.

Figure 2 shows a processor 200 according to a first embodiment of the present disclosure. The processor may include one or more of any type of processing element, a processor core, microprocessor, microcontroller, field-programmable gate arrays (FPGAs), application-specific integrated circuits (ASICs), digital signal processor, storage units, encryption systems and the like. The processor is divided in layers or zones. Each layer or zone may include one or more of the processing elements listed above. In Fig. 2 the processor 200 includes four layers: the first layer 202, the second layer 206, the third layer 210 and the fourth layer 214. A decoy digital entity may be embedded in each layer: the first decoy digital entity 204 is embedded in the first layer 202, the second decoy digital entity 208 is embedded in the second layer 206, the third decoy digital entity 212 is embedded in the third layer 210 and the fourth decoy digital entity 216 is embedded in the fourth layer 214. The decoy digital entities 204, 208, 212 and 216 may be different from each other or may be the same. For example, one of the decoy digital entities may be designed as a decoy name of a library and a second one may be designed as a decoy password. Also, multiple decoy digital entities may be embedded in one layer. The four layers of Fig. 2 are encapsulated in each other. This means that in order to reach, for example, the second layer 206 an attacker should already have been able to reverse engineer or break the first layer 202. In this case the attacker may have found the second decoy digital entity 208 embedded in the second layer 206 and may then search for information about the second decoy digital entity 208, as explained in Fig. 1. The monitoring device will detect such search and will alert the decoy digital entities handler. The decoy digital entities handler will retrieve the information about the second decoy digital entity and will send them to a user interface, which may display them to a user. The user, who may be a member of the security team of the manufacturer of the processor, will then receive the information about the second decoy digital entity together with its location inside the processor 200 and may then infer from this information that the second layer 206 and the first layer 202 of the processor 200 have been subjected to reverse engineering. This may have the effect to discover the attack strategy of the attacker.

Fig. 3 shows a processor device according to a second embodiment of the present disclosure. The processor 300 includes four layers: the first layer 302 in which the first decoy digital entity 304 is embedded, the second layer 306 in which the second decoy digital entity 308 is embedded, the third layer 310 in which the third decoy digital entity 312 is embedded, and the fourth layer 314 in which the fourth decoy digital entity 316 is embedded. In this embodiment the third layer 310 and the fourth layer 314 are parallel to each other, i.e. the two layers are independent from each other. If an attacker retrieves the third decoy digital entity 312, it means that he successfully hacked the first layer 302 and the second layer 306 but not necessarily the fourth layer 314.

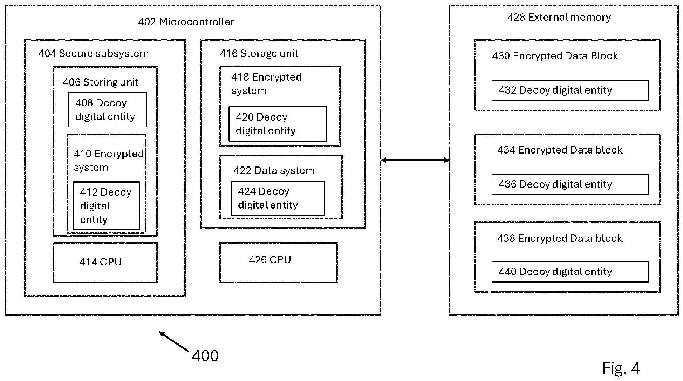

Fig. 4 shows a processor according to a third embodiment of the present disclosure. In this embodiment the processor includes two devices: a microcontroller 402 and an external memory 428. The external memory 428 and the microcontroller 402 may be connected via a communication bus or any other type of suitable communication. The microcontroller 402 includes several subsystems which may be encapsulated in different layers or zones of protection. The secure subsystem 404 and the storage unit 416 are both encapsulated in the microcontroller 402 and are designed as parallel subsystems, independent from each other. They may then belong to the same protection layer. The secure subsystem 404 includes several other subsystems, which may be encapsulated in each other or parallel to each other. For example, the encrypted system 410 is encapsulated in the storage unit 406. A decoy digital entity 408 is embedded in the storage unit 406 and a decoy digital entity 412 is embedded in the encrypted system 410. The secure subsystem 404 further includes a CPU 414. The storage unit 416 includes two subsystems which are parallel to each other, i.e. independent form each other: the encrypted system 418 and the data system 422. The encrypted system 418 includes the decoy digital entity 420 and the data system 422 includes the decoy digital entity 424. The microcontroller 402 may additionally include a CPU 426. In one embodiment one or more of the subsystems included in the microcontroller 402 may include multiple decoy digital entities. This may have the effect to enhance the probability that during a reverse engineering attempt an attacker discovers at least one decoy digital entity. The system depicted in Fig. 4 further includes an external memory 428. The external memory 428 includes three encrypted data blocks (430, 434 and 438) which each includes three decoy digital entities (432, 436 and 440). The data blocks are independent form each other and may be encrypted with different methods. Including decoy digital entities in encrypted data blocks may have the effect to see which kind of encrypted technology an attacker is capable of hacking, giving insights on the strategy of the attacker.

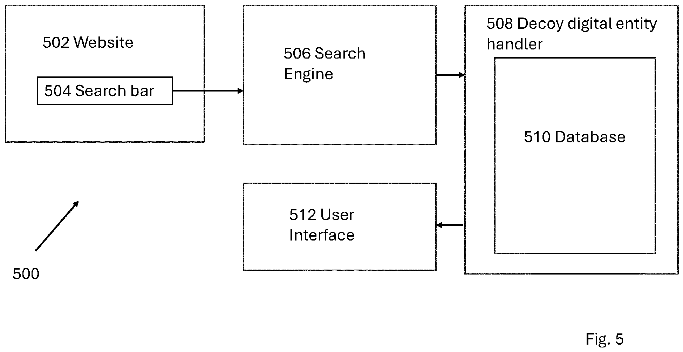

Fig. 5 shows a system according to a second aspect of the present disclosure. The system 500 includes a website 502. The website may be the website of a manufacturer. The website includes a search bar 504 coupled to a search engine 506 configured to search for information inside the website 502. The search engine may then be connected to a decoy digital entities handler 508 which includes a database 510. The database 510 may include a list of the decoy digital entities together with the information about processor and the layer of the processor in which the decoy digital entities are embedded. For example, referring to Fig.4 the list may include the information that the decoy digital entity 408 is included in the storage unit 406, which is encapsulated in the secure subsystem 404 of the microcontroller 402. The list may include also information about the model of the microcontroller 402. When an attacker finds a decoy digital entity during a reverse engineering attempt, he may then visit the website of the manufacturer of the processor in order to get more information about the decoy digital entity. He may then enter the decoy digital entity in the search bar 504. The search bar 504 will then pass the request to the search engine 506 in order to find the information about the decoy digital entity. The search engine 506 may be associated with a monitoring unit. The search engine may then forward the request to retrieve the information about the digital entity to the decoy digital entities handler. If the decoy digital entity is found in the database, the decoy digital entities handler 508 may forward the information about the decoy digital entity to a user interface 512 of the manufacturer. The information may include one of more of the following information: the type of device in which the decoy digital entity is embedded, information about the layer of the device in which the decoy digital entity is embedded (like for example if the layer was in an encrypted subsystem and if it is an encapsulated layer), and information about the customer and the product of the customer which is using the device which has been compromised. The user interface will then output the information to the manufacturer. For example, the user interface may output the information on a display of the user interface. Upon receiving this information, the manufacturer will know which processor and which layers of the processor have been compromised. The manufacturer may then take the necessary precautions. As example the manufacturer may alert an eventual costumer which is using the compromised processor.

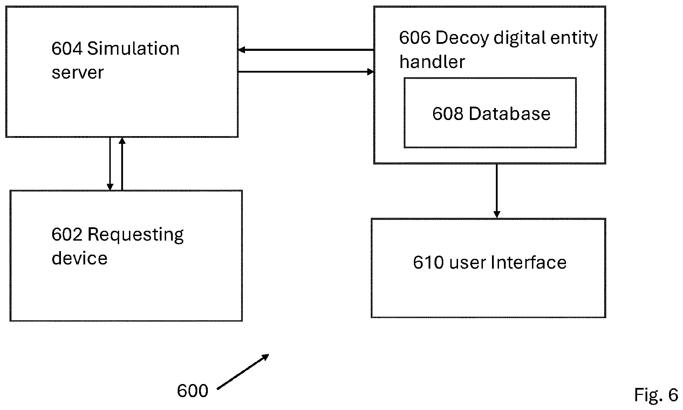

Figure 6 shows a system 600 according to an embodiment of the present disclosure. In this embodiment, the attacker may have found during the reverse engineering attempt a decoy digital entity which is designed as decoy URL address. The decoy URL address may be linked to a simulation server. The simulation server mimics the functionality of a real server and may be designed by the manufacturer. As example, the simulation server 604 may mimic the website of the manufacturer. The simulation server may be referred to as decoy webserver and may be designed to enter a conversation mode with the requesting computing device 602. In the conversation mode, the simulation server may ask the requesting computing device to enter an email or other personal data in order to be contacted and receive further information regarding the decoy digital entity. This may have the effect to gather and capture information about the attacker, like for example logical address and/or physical address of the attacker. Additionally, or alternatively, the simulation server 604 may include a monitoring unit and a search bar, for allowing the requesting computing device 602 to search information about the decoy digital entity. The simulation server may contact the decoy digital entities handler 606 with the information about the decoy digital entity, which the requesting device has entered in the search bar. The decoy digital entities handler may infer such information from the name of the digital decoy entity, or it may search for such information in the database 608. The decoy digital entities handler may find more than one decoy digital entity which matches the one requested by the simulation server 604. The decoy digital entities handler may then send the retrieved results to the simulation server. The simulation server may then present the results to the requesting computing device and ask the attacker which one of the decoy digital entities is he looking for. The attacker may then reply by clicking on one of the decoy digital entities or by answering a question asked by the simulation server. This may have the effect to easily identify the decoy digital entity that the attacker is searching for. The information about the identified decoy digital entity may then be sent to a user interface 610.

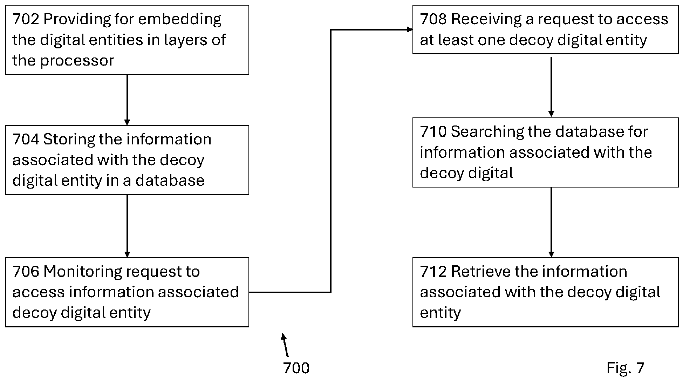

Figure 7 shows a flow chart 700 according to a method for detecting unauthorized access to a processor, as disclosed in the present disclosure. In a first step 702 a decoy digital entity is provided for embedding in at least a layer of a plurality of layers of the processor. The processor may be a processor according to Fig. 2 or Fig. 3 or Fig. 4 of the present disclosure. Each layer of the processor may include multiple decoy digital entities. In a second step 704 (which may be optional, if the information about the processor and its layer are directly embedded in the decoy digital entities) the information associated with the decoy digital entities are stored in a database. The information includes information about the processor and the layer of the processor in which the decoy digital entity is embedded. The information may be stored in the form of a table or a list. In a third step 706 a request to access information associated with the decoy digital entity is monitored. The request is done by a requesting computing device. The request may be done by contacting a computer network, for example a webserver. The webserver may include a search bar associated with a search engine. In a fourth step 708 the request is received. In response to receiving the request, in a fifth step 710 the database is searched for the information associated with the decoy digital entity. In a sixth step 712 the information associated with the decoy digital entity are retrieved. The information may be retrieved from the database. The information may then be sent to a user interface.

From reading the present disclosure, other variations and modifications will be apparent to the skilled person. Such variations and modifications may involve equivalent and other features which are already known in the art of semiconductor device processing, and which may be used instead of, or in addition to, features already described herein.

Although the appended claims are directed to particular combinations of features, it should be understood that the scope of the disclosure of the present specification also includes any novel feature or any novel combination of features disclosed herein either explicitly or implicitly or any generalization thereof, whether or not it relates to the same specification as presently claimed in any claim and whether or not it mitigates any or all of the same technical problems as does the present specification

The present disclosure refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" be used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A method for detecting an unauthorized access to a processor, the processor comprising a plurality of layers, and the method comprising the steps of:
providing a decoy digital entity, DDE, for embedding in a layer of the plurality of layers of the processor;
associating, with the decoy digital entity, information associated with the processor and the layer of the plurality of layers of the processor in which the decoy digital entity is embedded;
monitoring a computer network wherein the computer network is configured to receive, from a requesting computing device, a request using the decoy digital entity; and
in response to receiving the request from the requesting computing device:
reporting the unauthorized access.

2. The method according to claim 1, wherein the step of associating, with the decoy digital entity, information associated with the processor and the layer of the plurality of layers of the processor in which the decoy digital entity is embedded comprises the step of embedding the information in the decoy digital entity.

3. The method according to claim 1 or 2, further comprising the step of storing the information associated with the decoy digital entity in a database.

4. The method according to claim 3, wherein in response to receiving the request from the requesting computing device the method further comprises the step of searching the database for the information associated with the decoy digital entity; and retrieving from the database the information associated with the decoy digital entity.

5. The method according to any preceding claim wherein the decoy digital entity is a decoy IP address or a decoy password or a decoy name of a library or a decoy file or a decoy authentication token or a decoy URL address or a decoy cryptographic key.

6. The method according to any preceding claims, further comprising the step of sending the information associated with the decoy digital entity to a user interface.

7. The method according to any preceding claims, wherein the decoy digital entity is associated with a decoy webserver.

8. The method according to claim 7 further comprising the step of configuring the decoy webserver to enter a conversation mode with the requesting computing device and to gather information associated with the requesting computing device.

9. The method according to claim 8 wherein the information associated with the requesting computing device comprises a physical address and/or a logical address and/or an attack strategy of the requesting computing device.

10. A system for detecting unauthorized access to a processor comprising:
a device configured to generate a decoy digital entity, DDE, for embedding in a layer of a plurality of layers of the processor, wherein the decoy digital entity is associated with information associated with the processor and the layer of the plurality of layers of the processor in which the decoy digital entity is embedded;
a computer network;
a monitoring unit configured to detect that a request from a requesting computing device using the decoy digital entity has been received by the computer network; and
wherein in response to receiving the request the monitoring unit is further configured to report the unauthorized access to a decoy digital entities handler.

11. The system according to claim 10, wherein the system further comprises a database configured to store information associated with the decoy digital entity.

12. The system according to claim 11, wherein the decoy digital entities handler is configured to search the database for information associated with the decoy digital entity.

13. The system according to any of claims 10 to 12, wherein the system further comprises a decoy webserver configured to enter a conversation mode with the requesting computing device and to gather information associated with the requesting computing device.

14. The system according to any of claims 10 to 13, wherein the system further comprises a user interface.

15. The system according to claim 14, wherein the user interface is further configured to output the information associated with the decoy digital entity and/or to output the information associated with the requesting computing device.
